# EUROPÄISCHE PATENTANMELDUNG

(11) **EP 1 555 143 A2**
(43) Veröffentlichungstag der Anmeldung: **20.07.2005**
(21) Anmeldenummer: 05000388.8
(22) Anmeldetag: 11.01.2005
(51) Int. Cl.: B60C 23/04

(54) **Rolle bzw. Rad, insbesondere für Fahrzeuge**

(30) Priorität: 16.01.2004 DE 102004002652
(71) Anmelder: OCTAGON Cebulla KG, 42546 Velbert (DE)
(72) Erfinder: Cebulla, Axel, 42546 Velbert (DE)
(74) Vertreter: Cohausz & Florack

(57) **Zusammenfassung**

Die Erfindung betrifft eine Rolle (1) bzw. ein Rad insbesondere für Fahrzeuge wie Pkws oder Lkws, umfassend einen elastischen Reifen (3) sowie eine Felge (4) und/oder ein Lager. Zur Erhöhung und Gewährleistung der Sicherheit ist erfindungsgemäß vorgesehen, dass im oder am elastischen Reifen (3) mindestens ein piezoelektrisches Element zur elektrischen Versorgung mindestens eines elektrischen Verbrauchers angeordnet ist. Ferner ist eine Energieerzeugungseinrichtung für eine solche Rolle (1) bzw. ein solches Rad sowie ein entsprechendes Fahrzeug angegeben.

## Beschreibung

Die Erfindung betrifft eine Rolle bzw. ein Rad, insbesondere für Fahrzeuge wie Personenkraftwagen (Pkws) oder Lastkraftwagen (Lkws), umfassend einen elastischen Reifen und eine Felge und/oder ein Lager. Ferner betrifft die Erfindung eine Energieerzeugungseinrichtung für eine solche Rolle oder ein solches Rad sowie ein entsprechendes Sport- oder Freizeitgerät und ein entsprechendes Fahrzeug.

Mit dem Begriff Rolle bzw. Rad ist im vorliegenden Fall ein Gebilde zumindest bestehend aus einem elastischen Reifen sowie einer Felge und/oder einem Lager, beispielsweise Kugel- oder Wälzlager, für jegliche Art von Sport- oder Freizeitgeräten oder für jegliche Art von Fahrzeugen gemeint. Solche Sport- oder Freizeitgeräte sind beispielsweise Inlineskates, Rollschuhe, Skateboards oder Rollerboards oder Fahrräder. Fahrzeuge sind beispielsweise Kraftfahrzeuge wie Pkws oder Lkws oder Krafträder.

Aus dem Stand der Technik ist es bekannt, bei Freizeitgeräten oder Fahrzeugen der eingangs genannten Art aus Sicherheitsgründen eine Beleuchtung und/oder Reflektoren vorzusehen. In der Regel sind diese Sicherheitsmaßnahmen am Freizeitgerät bzw. Fahrzeug selbst montiert und nicht an den dazugehörigen Rädern. Insbesondere bei Fahrrädern ist es aber auch bekannt, den Reifen teilweise mit einer reflektierenden Beschichtung zu versehen, um gerade bei Dunkelheit eine gute Wahrnehmbarkeit zu gewährleisten.

Reflektoren haben den Vorteil, dass sie bei Bestrahlung mit einer Lichtquelle ohne eigene Energieversorgung durch Reflektion die Wahrnehmbarkeit ermöglichen. Diese ist jedoch bei weitem nicht so gut wie bei Verwendung einer elektrischen Beleuchtung.

Allerdings funktioniert eine elektrische Beleuchtung nur in Verbindung mit einer entsprechenden Energieversorgung, beispielsweise einer Batterie oder einem Generator. Über eine solche Energieversorgung können neben der Beleuchtung auch weitere elektrische Verbraucher, beispielsweise Signalvorrichtungen wie Hupen oder elektrische Klingeln, betrieben werden.

Bei vielen Sport- oder Freizeitgeräten ist es aufgrund ihrer geringen Größe aber in der Regel nicht möglich, eine geeignete Stromversorgung für die Beleuchtung und andere elektrische Verbraucher anzubringen.

Bei Fahrzeugen, insbesondere Kraftfahrzeugen wie Pkws oder Lkws, ist die Beleuchtung, das heißt die Front- und Rückscheinwerfer, in der Regel ausschließlich an der Vorder- bzw. Rückseite des Fahrzeugs angebracht. Das führt dazu, dass ein Fahrzeug bei Dunkelheit mit eingeschaltetem Licht von vorne und von hinten besonders gut und schon auf weite Entfernung erkennbar ist. Von der Seite ist dagegen ein Fahrzeug, auch mit eingeschaltetem Licht, bei Dunkelheit nur schwer zu erkennen. Zwar gibt es seitlich an der Karosserie angebrachte Reflektoren und jüngster Zeit auch vermehrt Positionslampen, die jedoch, insbesondere bei höheren Geschwindigkeiten oder bei ungünstigen Witterungsverhältnissen wie Regen und/oder Nebel, nur relativ schwer zu erkennen sind.

Ausgehend von dem zuvor beschriebenen Stand der Technik liegt der vorliegenden Erfindung daher die Aufgabe zugrunde, eine Rolle bzw. ein Rad zu schaffen, die/das eine elektrische Versorgung und damit eine Erhöhung der Sicherheit gewährleistet.

Erfindungsgemäß ist die zuvor hergeleitete und aufgezeigte Aufgabe zunächst dadurch gelöst, dass im oder am elastischen Reifen der/des eingangs genannten Rolle/Rades mindestens ein piezo-elektrisches Element zur elektrischen Versorgung mindestens eines elektrischen Verbrauchers angeordnet ist. Ein piezo-elektrisches Element wandelt mechanischen Druck in elektrische Spannung um und stellt somit eine ideale Energieerzeugungseinrichtung für ein Fahrzeug bzw. ein Sport- oder Freizeitgerät, insbesondere für Geräte einer geringen Größe wie Inlineskates, Rollschuhe, Skateboards oder Rollerboards, dar. Mit einem solchen piezo-elektrischen Element im Innern oder außen am Reifen wird automatisch bei sachgemäßer Verwendung des Fahrzeugs bzw. Geräts durch den Druck, der auf den bzw. die Reifen wirkt, die erforderliche Energie erzeugt, um einen elektrischen Verbraucher, beispielsweise eine Lichtquelle, insbesondere eine LED, zu versorgen. Eine aufwendige Stromversorgung über Batterien oder einen Generator ist nicht mehr nötig.

Vorteilhafterweise ist der elektrische Verbraucher, insbesondere wenn es sich dabei um eine Lichtquelle handelt, im oder am Reifen angeordnet. Auf diese Weise könnte das piezo-elektrische Element unmittelbar, evtl. unter Zwischenschaltung einer zur Ansteuerung des Verbrauchers dienenden Steuerelektronik, mit dem elektrischen Verbraucher verbunden werden. Der Verbraucher kann selbstverständlich auch, unter Verwendung einer geeigneten Stromübertragungseinrichtung, außerhalb des Reifens.

Wie bereits zuvor gesagt, handelt es sich bei dem elektrischen Verbraucher beispielsweise um eine Lichtquelle, insbesondere eine LED, die idealerweise im Reifen selbst angeordnet ist. Besteht der Reifen aus einem durchsichtigen Material, so kann auf diese Weise von der oder den Rollen bzw. Rädern ein weithin sichtbares Licht ausgestrahlt werden, wodurch der Benutzer des Sport- oder Freizeitgeräts auch im Dunkeln gut zu erkennen ist. Eine solche Vorrichtung würde zu einer deutlichen Erhöhung der Sicherheit beitragen.

Entsprechendes gilt auch für ein Fahrzeug, z. B. einen Pkw, der auf diese Weise im Dunkeln auch ohne eingeschaltete Beleuchtung oder von der Seite, die in der Regel keine zusätzliche Beleuchtung aufweist, immer gut zu erkennen ist.

Durch Verwendung einer separaten Steuerelektronik in Kombination mit einer Lichtquelle kann auch ein blinkendes Signal erzeugt werden. Auf diese Weise wird die Wahrnehmbarkeit zusätzlich erhöht.

Das piezo-elektrische Element kann verschiedene Formen haben. Vorteilhaft ist es, wenn das piezo-elektrische Element gekrümmt, insbesondere kreisbogenförmig gekrümmt, ist. Auf diese Weise können mehrere piezo-elektrische Elemente kreisförmig um die Rollen- bzw. Radachse angeordnet werden. Auch ist es denkbar, nur ein einziges, ringförmiges piezo-elektrisches Element zu verwenden. So kann in jeder Stellung der Rolle bzw. des Rades relativ zum Boden der einwirkende Druck genutzt und in elektrische Spannung umgewandelt werden.

Es ist auch denkbar, dass das piezo-elektrische Element bandförmig ausgebildet ist, beispielsweise als ein im Reifen befindliches Band oder als ein an der Reifenfläche befindliches Band.

Um eine möglichst einfache Herstellung der erfindungsgemäßen Rolle bzw. des Rades zu ermöglichen, kann die gesamte Rolle bzw. das gesamte Rad, insbesondere der Reifen, aus zwei rotationssymmetrischen Hälften zusammengesetzt sein. Auf diese Weise können die elektronischen Bauteile und das piezo-elektrische Element auf einfache Weise im Inneren des Reifens angeordnet werden.

Die zuvor hergeleitete und aufgezeigte Aufgabe wird ferner gelöst durch eine Energieerzeugungseinrichtung für eine Rolle bzw. ein Rad, insbesondere für Fahrzeuge wie Pkws oder Lkws, umfassend eine Felge und einen elastischen Reifen, insbesondere für eine Rolle bzw. ein Rad wie sie/es vorangehend beschrieben wurde, wobei zur elektrischen Versorgung mindestens eines elektrischen Verbrauchers mindestens ein piezo-elektrisches Element derart im oder am elastischen Reifen angeordnet ist, dass es mit dem Reifen mechanisch zusammenwirken kann. Dabei ist das piezo-elektrische Element über Stromversorgungsleitungen mit mindestens einem der elektrischen Verbraucher, insbesondere einer Lichtquelle, beispielsweise einer LED, verbunden. Der elektrische Verbraucher kann dabei ebenfalls im oder am elastischen Reifen angeordnet sein.

Es ist auch denkbar, die Lichtquelle bandförmig auszubilden. Ein solches Leuchtband könnte eine Gasfüllung und eine Innenbeschichtung aufweisen. Auf diese Weise könnte das Gas ähnlich wie bei einer Leuchtstoffröhre durch die Energie des piezo-elektrischen Elements gezündet und damit zum Leuchten gebracht werden.

Ferner wird die zuvor hergeleitete und aufgezeigte Aufgabe auch durch ein Sport- oder Freizeitgerät mit mindestens einer Rolle, insbesondere ein Inlineskate, Rollschuh, Skateboard oder Rollerboard, gelöst, wobei mindestens eine Rolle wie zuvor beschrieben ausgebildet ist und/oder eine Energieerzeugungseinrichtung wie zuvor beschrieben vorgesehen ist.

Schließlich wird die zuvor hergeleitete und aufgezeigte Aufgabe auch durch ein Fahrzeug mit mindestens einem Rad, insbesondere Kraftfahrzeug, z. B. Pkw, gelöst, wobei mindestens ein Rad wie zuvor beschrieben ausgebildet ist und/oder eine Energieerzeugungseinrichtung wie zuvor beschrieben vorgesehen ist.

Insbesondere das Rad eines Fahrzeugs, selbstverständlich aber auch die Rolle eines Sport- oder Freizeitgeräts, kann, wie allgemein üblich, auch mit Luft gefüllt sein. Hierbei kann das piezo-elektrische Element, welches durch den Luftdruck im Reifen eine Spannung erzeugt, als Spannungsversorgungsquelle eingesetzt werden, insbesondere für eine Mess- und Überwachungselektronik im Reifen.

Nachfolgend wird die Erfindung anhand von Ausführungsbeispiele zeigenden Zeichnungen erläutert. Es zeigen schematisch:
- Fig. 1: die Innenseite einer Rollenhälfte eines ersten Ausführungsbeispiels einer erfindungsgemäßen Rolle;
- Fig. 2: ein zweites Ausführungsbeispiel einer erfindungsgemäßen Rolle im Querschnitt.

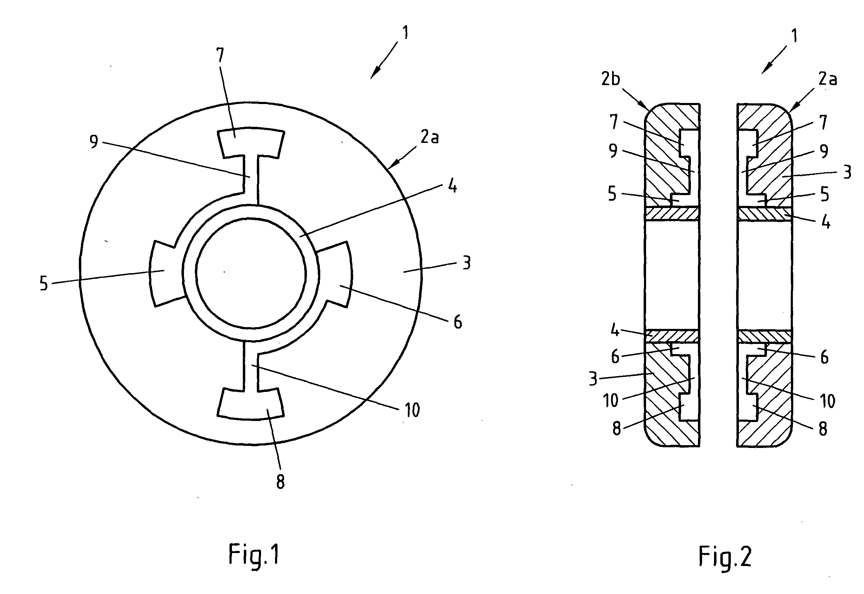

Fig. 1 zeigt die Innenseite einer Rollenhälfte 2a einer ersten Ausführungsform einer erfindungsgemäßen Rolle 1. Die Rolle 1 umfasst einen Reifen 3 aus durchsichtigem und elastischem Kunststoff und eine Felge 4, auf die der Reifen 3 aufgesetzt ist. Im dargestellten Ausführungsbeispiel ist sowohl der Reifen 3 als auch die Felge 4 zweiteilig ausgeführt. Im zusammengebauten Zustand sind dann zwei rotationssymmetrische Rollenhälften 2a und 2b, entsprechend also auch zwei Reifenhälften und zwei Felgenhälften, miteinander verbunden.

Auf der Innenseite der Reifenhälfte ist ein Raum 5 für ein erstes piezo-elektrisches Element und ein Raum 6 für ein zweites piezo-elektrisches Element vorgesehen. Ferner ist ein Raum 7 für eine erste LED und ein Raum 8 für eine zweite LED vorgesehen, wobei die Räume 5 und 7 bzw. 6 und 8 jeweils mit einem Kanal 9 bzw. 10 verbunden sind, der zur Aufnahme der Stromversorgungsleitung dient.

Die Räume 5 und 6, die zur Aufnahme je eines piezo-elektrischen Elementes dienen, sind so groß, dass auch eine Steuerelektronik zur Ansteuerung der LED's darin Platz findet.

Im zusammengebauten Zustand sind die Räume 5, 6, 7 und 8 sowie die Kanäle 9 und 10 mit den darin befindlichen elektronischen Bauteilen mittels der zweiten Reifenhälfte bzw. Rollenhälfte 2b verschlossen, so dass die elektronischen Bauteile inmitten der Rolle 1 angeordnet sind.

Fig. 2 zeigt ein weiteres Ausführungsbeispiel einer erfindungsgemäßen Rolle 1, welches im wesentlichen dem ersten Ausführungsbeispiel entspricht, jedoch mit dem Unterschied, dass die Räume 5 und 6 zur Aufnahme der piezo-elektrischen Elemente schlitzförmig ausgebildet sind, und zwar zur Aufnahme eines bandförmig ausgebildeten piezo-elektrischen Elements, welches die Form eines Ringes hat.

Fig. 2 zeigt auch, dass sowohl in der rechten dargestellten Rollenhälfte 2a als auch in der linken dargestellten Rollenhälfte 2b einander entsprechende Aussparungen bzw. Räume 5, 6, 7, 8, 9 und 10 vorgesehen sind, die derart ausgebildet sind, dass im zusammengebauten Zustand die elektronischen Bauteile exakt mittig angeordnet sind.

## Patentansprüche

1. Rolle (1) bzw. Rad, insbesondere für Fahrzeuge wie Pkws oder Lkws, umfassend einen elastischen Reifen (3) und eine Felge (4) und/oder ein Lager, **dadurch gekennzeichnet, dass** im oder am elastischen Reifen (3) mindestens ein piezo-elektrisches Element zur elektrischen Versorgung mindestens eines elektrischen Verbrauchers angeordnet ist.

2. Rolle (1) bzw. Rad nach Anspruch 1, **dadurch gekennzeichnet, dass** der elektrische Verbraucher im oder am elastischen Reifen (3) angeordnet ist.

3. Rolle (1) bzw. Rad nach Anspruch 1 oder 2, **dadurch gekennzeichnet, dass** das piezo-elektrische Element gekrümmt, insbesondere kreisbogenförmig gekrümmt, ist.

4. Rolle (1) bzw. Rad nach Anspruch 3, **dadurch gekennzeichnet, dass** mindestens zwei piezo-elektrische Elemente vorgesehen sind, die kreisförmig um die Rollenachse angeordnet sind, oder ein piezo-elektrisches Element vorgesehen ist, das ringförmig ausgebildet ist.

5. Rolle (1) bzw. Rad nach einem der vorangehenden Ansprüche, **dadurch gekennzeichnet, dass** der elektrische Verbraucher eine Lichtquelle, insbesondere eine LED, ist.

6. Rolle (1) bzw. Rad nach einem der vorangehenden Ansprüche, **dadurch gekennzeichnet, dass** im oder am Reifen (3) eine Steuerelektronik zur Ansteuerung des elektrischen Verbrauchers vorgesehen ist.

7. Rolle (1) bzw. Rad nach einem der vorangehenden Ansprüche, **dadurch gekennzeichnet, dass** der Reifen (3) aus einem durchsichtigen Material besteht.

8. Rolle (1) bzw. Rad nach einem der vorangehenden Ansprüche, **dadurch gekennzeichnet, dass** die Rolle (1) bzw. Rad, insbesondere der Reifen (3), aus zwei rotationssymmetrischen Hälften zusammengesetzt ist.

9. Energieerzeugungseinrichtung für eine Rolle (1) bzw. ein Rad, insbesondere für Fahrzeuge wie Pkws oder Lkws, umfassend eine Felge (4) und einen elastischen Reifen (3), **dadurch gekennzeichnet, dass** zur elektrischen Versorgung mindestens eines elektrischen Verbrauchers, mindestens ein piezo-elektrisches Element derart im oder am elastischen Reifen (3) angeordnet ist, dass es mit dem Reifen (3) mechanisch zusammenwirken kann.

10. Fahrzeug mit mindestens einem Rad, insbesondere Kraftfahrzeug, **dadurch gekennzeichnet, dass** mindestens ein Rad nach einem der Ansprüche 1 bis 8 ausgebildet ist und/oder eine Energieerzeugungseinrichtung nach Anspruch 9 vorgesehen ist.
